# EUROPEAN PATENT APPLICATION

(11) **EP 4 170 586 A1**
(43) Date of publication of application: **26.04.2023**
(21) Application number: 21826406.7
(22) Date of filing: 03.06.2021
(51) Int. Cl.: G06T 7/00

(54) **FACE STRUCTURE ESTIMATION DEVICE, FACE STRUCTURE ESTIMATION METHOD, AND FACE STRUCTURE ESTIMATION PROGRAM**

(30) Priority: 19.06.2020 JP 2020106439
(71) Applicant: Kyocera Corporation, Kyoto-shi Kyoto 612-8501 (JP)
(72) Inventor: KIM Jaechul, Kyoto-shi, Kyoto 612-8501 (JP)
(74) Representative: Viering, Jentschura & Partner mbB Patent- und Rechtsanwälte
(86) International application number: PCT/JP2021/021273
(87) International publication number: WO 2021/256288

(57) **Abstract**

A facial structure estimating device 10 includes an acquiring unit 11 and a controller 13. The acquiring unit 11 acquires a facial image. The controller 13 functions as an estimator 16 that estimates a facial structure from a facial image. The controller 13 tracks a starting feature point constituting a facial structure using a tracking algorithm in a facial image of a frame subsequent to a facial image used to estimate the facial structure. The controller 13 obtains a resulting feature point by tracking a tracked feature point using an algorithm in an original frame facial image. The controller 13 selects a learning facial image for which the interval between resulting and starting feature points is less than or equal to a threshold. The controller 13 trains the estimator using the facial image selected for learning and the facial structure estimated by the estimator 16 based on the facial image.

## Description

### CROSS-REFERENCE TO RELATED APPLICATIONS

This application claims priority of Japanese Patent Application No. 2020-106439 filed in Japan on June 19, 2020 and the entire disclosure of this application is hereby incorporated by reference.

### TECHNICAL FIELD

The present invention relates to a facial structure estimating device, a facial structure estimating method, and a facial structure estimating program.

### BACKGROUND OF INVENTION

For example, devices that perform various functions in accordance with the condition of a driver inside a vehicle, such as encouraging a drowsy occupant to rest or shifting to automatic operation, are being considered. In such devices, there is a need for simple recognition of the condition of an occupant. Ascertaining the condition of a person, such as an occupant, by estimating the facial structure in accordance with the condition of the person is being considered. For example, estimating a facial structure from a facial image using deep learning is known (for example, refer to Patent Literature 1).

### CITATION LIST

### PATENT LITERATURE

Patent Literature 1: International Publication No. 2019-176994

### SUMMARY

In order to solve the above-described problem, in a First Aspect, a facial structure estimating device includes an acquiring unit and a controller. The acquiring unit is configured to acquire a facial image. The controller is configured to output a facial structure of the facial image. The controller functions as an estimator configured to estimate a facial structure of a facial image acquired by the acquiring unit based on the facial image. The controller tracks a starting feature point constituting the facial structure in a facial image of a frame subsequent to a frame of a facial image used in estimation of the facial structure using a prescribed tracking algorithm. The controller tracks a tracked feature point in a facial image of an original frame using a prescribed tracking algorithm to obtain a resulting feature point. The controller selects a facial image for learning for which an interval between the starting feature point and the resulting feature point is less than or equal to a threshold. The controller trains the estimator using a facial image selected for learning and a facial structure estimated by the estimator based on the facial image.

In a Second Aspect, a facial structure estimating method includes an acquiring step and an output step. A facial image is acquired in the acquiring step. A facial structure of the facial image is output in the output step. The output step includes an estimating step, a selecting step, and a training step. In the estimating step, a facial structure of the facial image acquired in the acquiring step is estimated based on the facial image. In the selecting step, a starting feature point constituting the facial structure is tracked using a prescribed tracking algorithm in a facial image of a frame subsequent to a frame of a facial image used in estimation of the facial structure, a tracked feature point is tracked using a prescribed tracking algorithm in a facial image of an original frame to obtain a resulting feature point, and a facial image for learning for which an interval between the starting feature point and the resulting feature point is less than or equal to a threshold is selected. In the training step, the estimating step is trained using a facial image selected for learning and a facial structure estimated in the estimating step based on the facial image.

In a Third Aspect, a facial structure estimating program is configured to make a computer function as an acquiring unit and a controller. The acquiring unit is configured to acquire a facial image. The controller is configured to output a facial structure of the facial image. The controller functions as an estimator configured to estimate a facial structure of a facial image acquired by the acquiring unit based on the facial image. The controller tracks a starting feature point constituting the facial structure using a prescribed tracking algorithm in a facial image of a frame subsequent to a frame of a facial image used in estimation of the facial structure. The controller tracks a tracked feature point using a prescribed tracking algorithm in a facial image of an original frame to obtain a resulting feature point. The controller selects a facial image for learning for which an interval between the starting feature point and the resulting feature point is less than or equal to a threshold. The controller trains the estimator using a facial image selected for learning and a facial structure estimated by the estimator based on the facial image.

### BRIEF DESCRIPTION OF THE DRAWINGS

FIG. 1 is a block diagram illustrating an outline configuration of a facial structure estimating device according to an embodiment.
FIG. 2 is a conceptual diagram for describing training used to primarily construct an estimator in FIG. 1.
FIG. 3 is a conceptual diagram for describing a method for calculating validity, i.e., the ground truth, based on a facial structure estimated by the estimator in FIG. 1 and a labeled facial structure.
FIG. 4 is a conceptual diagram for describing training for constructing an evaluator in FIG. 1.
FIG. 5 is a diagram for describing a method of estimating a resulting feature point and the relationship between the resulting feature point and a starting feature point.
FIG. 6 is a conceptual diagram for describing training used to secondarily construct an estimator in FIG. 1.
FIG. 7 is a flowchart for describing construction processing executed by a controller in FIG. 1.

### DESCRIPTION OF EMBODIMENTS

Hereafter, a facial structure estimating device to which an embodiment of the present disclosure has been applied will be described while referring to the drawings. The following description of a facial structure estimating device to which an embodiment of the present disclosure has been applied also serves as a description of a facial structure estimating method and a facial structure estimating program to which an embodiment of the present disclosure has been applied.

A facial structure estimating device according to an embodiment of the present disclosure is, for example, provided in a mobile object. Such mobile objects may include, for example, vehicles, ships, and aircraft. Vehicles may include, for example, automobiles, industrial vehicles, rail vehicles, motorhomes, and fixed-wing aircraft traveling along runways. Automobiles may include, for example, passenger cars, trucks, buses, motorcycles, and trolleybuses. Industrial vehicles may include, for example, industrial vehicles used in agriculture and construction. Industrial vehicles may include, for example, forklift trucks and golf carts. Industrial vehicles used in agriculture may include, for example, tractors, cultivators, transplanters, binders, combine harvesters, and lawn mowers. Industrial vehicles used in construction may include, for example, bulldozers, scrapers, excavators, cranes, dump trucks, and road rollers. Vehicles may include vehicles that are human powered. The categories of vehicles are not limited to the above examples. For example, automobiles may include industrial vehicles that can travel along roads. The same vehicles may be included in multiple categories. Ships may include, for example, jet skis, boats, and tankers. Aircraft may include, for example, fixed-wing and rotary-wing aircraft.

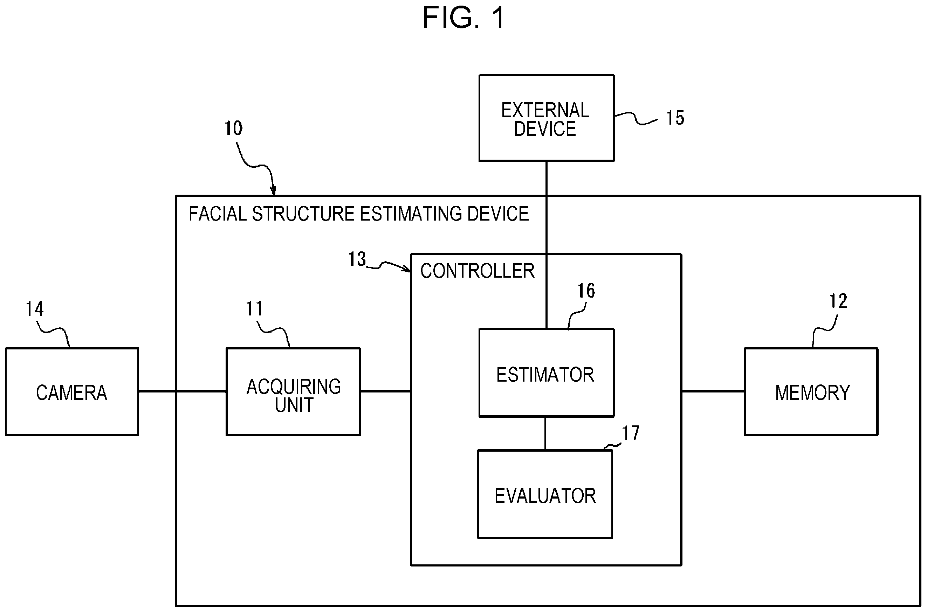

As illustrated in FIG. 1, a facial structure estimating device 10 according to an embodiment of the present disclosure includes an acquiring unit 11, a memory 12, and a controller 13.

The acquiring unit 11, for example, acquires a facial image, which is an image of the face of an occupant captured by a camera 14. The camera 14 is, for example, mounted at a position where the camera 14 can capture an image of the region around the face of an occupant at a particular position in a moving vehicle such as in the driver's seat. The camera 14 captures facial images at 30 fps, for example.

The memory 12 includes any suitable storage device such as a random access memory (RAM) or a read only memory (ROM). The memory 12 stores various programs that make controller 13 function and a variety of information used by controller 13.

The controller 13 includes at least one processor and memory. Such processors may include general-purpose processors into which specific programs are loaded to perform specific functions, and dedicated processors dedicated to specific processing. Dedicated processors may include application specific integrated circuits (ASICs). Processors may include programmable logic devices (PLDs). PLDs may include field-programmable gate arrays (FPGAs). The controller 13 may be either a system-on-a-chip (SoC) or a system in a package (SiP), in which one or more processors work together. The controller 13 controls operation of each component of the facial structure estimating device 10.

The controller 13 outputs a facial structure of the facial image acquired by the acquiring unit 11 to an external device 15. Facial structures are features that identify facial expressions and so on that change in accordance with a person's condition and, for example, consist of a collection of feature points. Feature points are, for example, points defined along the contours of a face, such as the tip of the chin, points defined along the contours of the eyes, such as the inner and outer corners of the eyes, and points defined along the bridge of the nose from the tip of the nose to the base of the nose. Outputting of the facial structure by the controller 13 will be described in detail below. The controller 13 functions as an estimator 16 and an evaluator 17.

The estimator 16 estimates the structure of a facial image acquired by the acquiring unit 11 based on the facial image. The facial structure estimated by the estimator 16 is output from the controller 13. The estimator 16 consists of, for example, a multilayer-structure neural network. As described later, the estimator 16 is constructed by performing supervised learning.

The evaluator 17 calculates the validity of a facial structure estimated by the estimator 16. As described later, the evaluator 17 varies a threshold used to train the estimator 16 based on the validity. The evaluator 17 consists of, for example, a multilayer-structure neural network. As described later, the evaluator 17 is constructed by performing supervised learning.

Next, the supervised learning of the estimator 16 and the evaluator 17 will be described. Supervised learning is performed in order to construct the estimator 16 and the evaluator 17 at the time of manufacture of the facial structure estimating device 10. Construction of the estimator 16 and the evaluator 17 may be performed for a single facial structure estimating device 10, and data for constructing the estimator 16 and the evaluator 17 may be stored in other facial structure estimating devices 10.

Construction of the estimator 16 and the evaluator 17 is described below. Multiple sets each consisting of a facial image and a labeled facial structure for the facial image are used to construct the estimator 16 and the evaluator 17 using machine learning. A labeled facial structure is a facial structure that is the ground truth for a facial image. Labeled facial structures are created by human judgment, for example, based on definitions such as those described above.

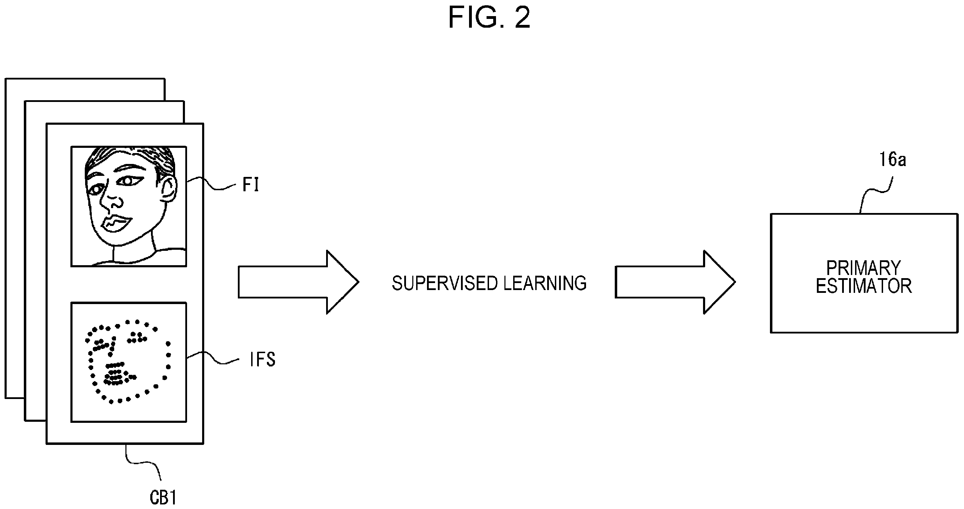

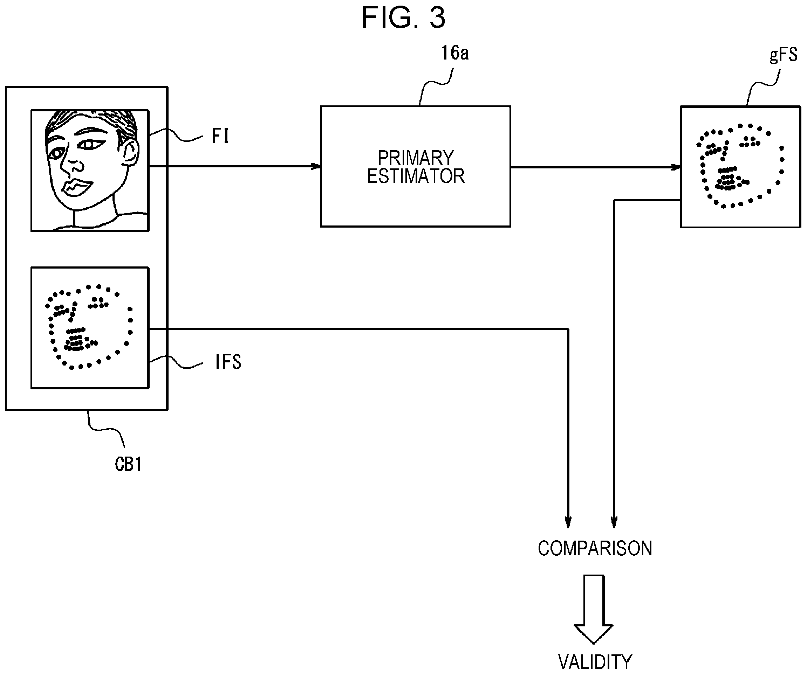

As illustrated in FIG. 2, a primary estimator 16a is constructed by performing supervised learning using a labeled facial structure IFS as the ground truth for a facial image FI. As illustrated in FIG. 3, a constructed primary generic estimator 18 estimates a facial structure gFS from the facial images FI included in the multiple sets CB1.

The controller 13 calculates the validity of the estimated facial structure gFS using the labeled facial structure IFS corresponding to the facial image FI used to estimate the facial structure gFS. Validity is the agreement of the estimated facial structure gFS with the labeled facial structure lFS, and is calculated, for example, so as to be lower the greater the distance between a point making up the estimated facial structure gFS and a point making up the labeled facial structure lFS becomes and so as to be higher as this difference approaches zero.

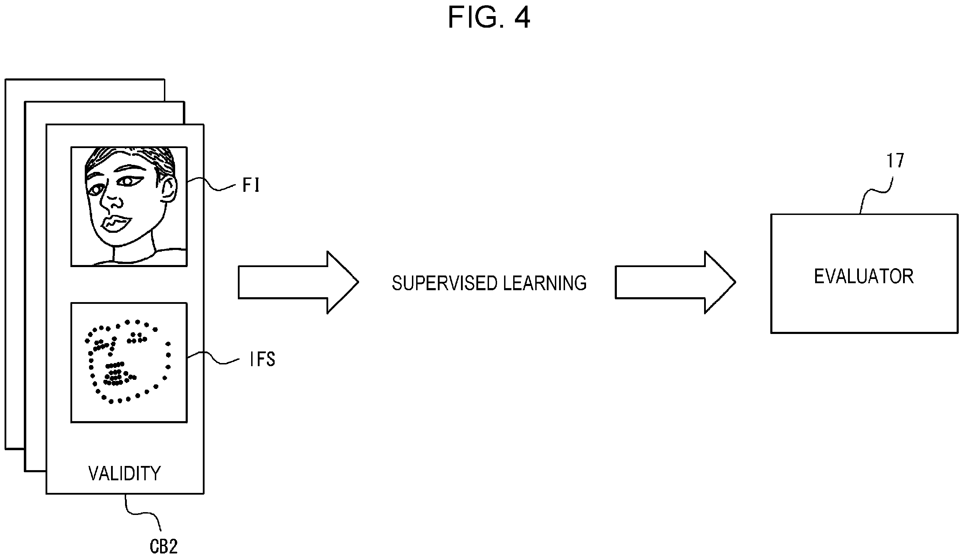

As illustrated in FIG. 4, multiple sets CB2 each consisting of a facial image FI, a labeled facial structure lFS, and a validity are used to construct the evaluator 17. The evaluator 17a is constructed by performing supervised learning using the validity as the ground truth for the facial image FI and the labeled facial structure lFS.

Additional machine learning proceeds for the primary estimator 16a. Additional machine learning for the primary estimator 16a is not limited to being performed the time of manufacture, and may be performed at the time of use. Simple facial images FI without labeled facial structures lFS are used in the additional machine learning for the primary estimator 16a. Facial images FI used in the additional machine learning are selected as follows.

In order to select facial images FI for additional machine learning, multiple frames of facial images FI captured for the same person at a speed of, for example, 30 fps, are used. In this embodiment, for example, four frames of facial images FI are used. The primary estimator 16a estimates the facial structure gFS of the facial image FI of the first frame among the multiple frames of facial images FI based on that facial image FI.

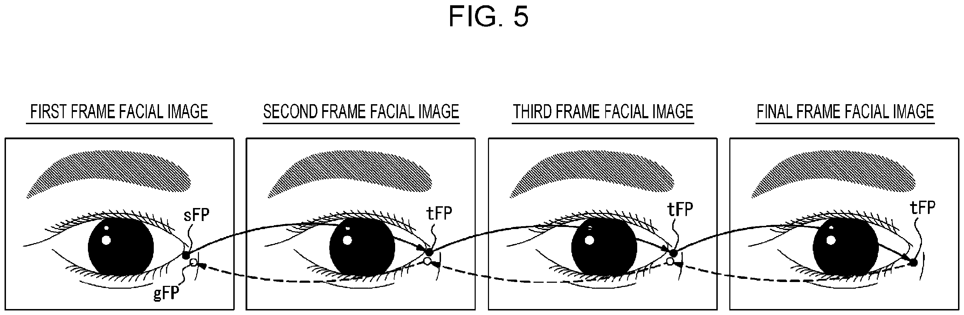

As illustrated in FIG. 5, the controller 13 uses each feature point constituting the estimated facial structure gFS as a starting feature point sFP and estimates to which positions the feature point moves in the facial images FI of subsequent frames using a prescribed tracking algorithm. For example, the prescribed tracking algorithm is a gradient method, more specifically, the Lucas-Kaneda method.

The controller 13 sequentially tracks a starting feature point sFP across multiple frames and calculates the positions of a tracked feature point tFP. After calculating the position of the tracked feature point tFp in the final frame, the controller 13 uses the same prescribed tracking algorithm to estimate to which positions this feature point moves to in the facial images FI of the previous frames. The controller 13 sequentially tracks the tracked feature point tFp in the final frame across multiple frames to calculate the position of a resulting feature point gFP in the facial image FI of the first frame.

The controller 13 calculates the interval between the starting feature point sFP and the resulting feature point gFP. The controller 13 compares the calculated interval to a threshold. The threshold may be adjusted based on the validity as described above. The evaluator 17 may estimate the validity based on at least one facial image FI out of facial images FI of multiple frames. The controller 13 may set the threshold so as to become smaller, the higher the validity becomes. When the calculated interval is less than or equal to the threshold, the controller 13 selects at least one of the facial images FI of multiple frames as a facial image FI to use in additional machine learning. An interval may be calculated for each of the multiple feature points constituting up the facial structure gFS, and the threshold may be compared to a representative value, such as the mean, median, or maximum value, of the multiple intervals.

The controller 13 combines the estimated facial structure gFS estimated by the estimator 16 based on the selected facial image FI with the facial image FI as a pseudo labeled facial structure vlFS. The controller 13 may combine a facial structure composed of a point obtained by averaging the starting feature point sFP and the resulting feature point gFP based on the selected facial image FI, i.e., the midpoint, and the facial image FI to obtain the pseudo labeled facial structure vlFS. The facial structure gFS is estimated using a larger number of facial images FI than the facial images FI of a true labeled facial structure IFS, and sets CB3 each consisting of a pseudo labeled facial structure vlFS and a facial image FI are generated.

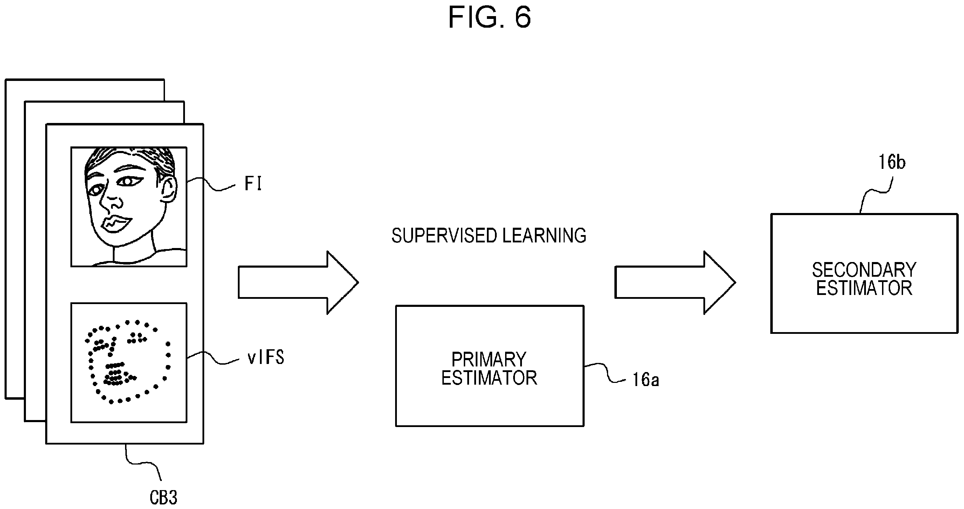

As illustrated in FIG. 6, supervised learning proceeds for the primary estimator 16a using multiple sets CB3 each consisting of a facial image FI and a pseudo labeled facial structure vlFS and a secondary estimator 16b is constructed. Data for building the secondary estimator 16b is generated and the controller 13 functions as the estimator 16 based on this data.

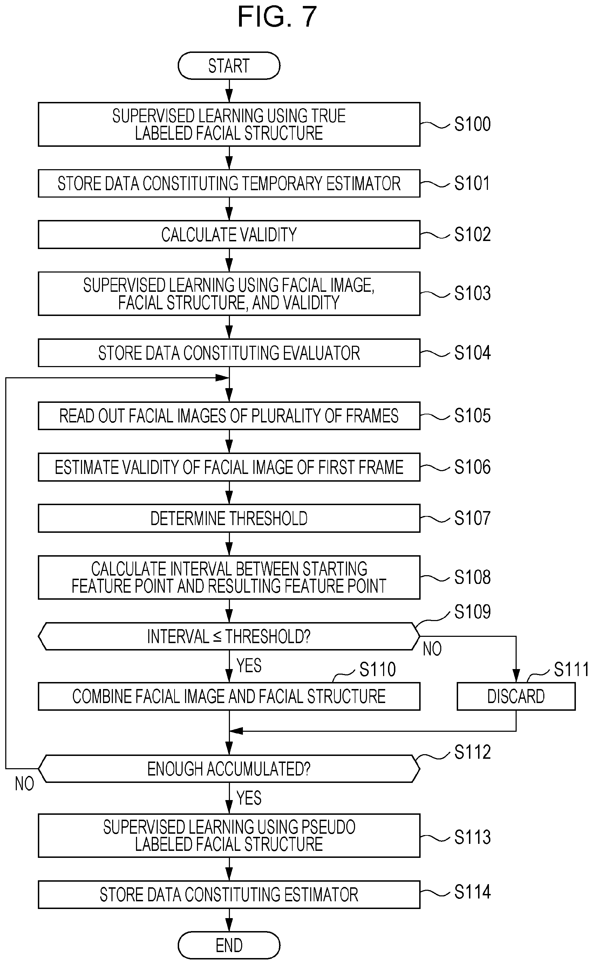

Next, construction processing performed by the controller 13 at the time of manufacture of this embodiment will be described using the flowchart in FIG. 7. The construction processing starts, for example, when the controller 13 recognizes an operation input to start the construction in a state where multiple sets CB1 of facial images FI and labeled facial structures lFS and multiple frames of facial images FI captured for the same person can be supplied to the facial structure estimating device 10.

In Step S100, the controller 13 performs supervised learning of a facial image FI using a true labeled facial structure IFS as a ground truth. After the supervised learning, the process advances to Step S101.

In Step S101, the controller 13 stores the data for building the primary estimator 16a constructed through the supervised learning in Step S100 in the memory 12. After storing the data, the process advances to Step S102.

In Step S102, the controller 13 makes the primary estimator 16a constructed in Step S101 estimate a facial structure gFS based on facial images FI. The controller 13 also calculates a validity using the estimated facial structure gFS and a labeled facial structure IFS. After the calculation, the process advances to Step S103.

In Step S103, the controller 13 performs supervised learning of the facial image FI and the labeled facial structure lFS using the validity calculated in Step S102 as the ground truth. After the supervised learning, the process advances to Step S104.

In Step S104, the controller 13 stores the data for building the evaluator 17 constructed by the supervised learning in Step S103 in the memory 12. After storing the data, the process advances to Step S105.

In Step S105, the controller 13 reads out the facial images FI of multiple frames of the same person. After that, the process advances to Step S106.

In Step S106, the controller 13 makes the primary estimator 16a, which was constructed in Step S101, estimate the facial structure gFS of the facial image FI of the first frame among the multiple frames of facial images FI read out in Step S105. The controller 13 also makes the evaluator 17 estimate the validity for the facial image FI and the facial structure gFS. After the estimation, the process advances to Step S107.

In Step S107, the controller 13 determines the threshold based on the validity estimated in Step S106. After the determination, the process advances to Step S108.

In Step S108, a position in the facial image FI is calculated using a feature point making up the facial structure gFS estimated in Step S106 as a starting feature point sFP. The controller 13 estimates the moved positions of the starting feature point sFP in subsequent frames using a prescribed tracking algorithm. The controller 13 estimates the position of a resulting feature point gFP by estimating the moved position of the tracked feature point tFp in the facial image FI of the first frame using a prescribed tracking algorithm. The controller 13 calculates the interval between the starting feature point sFP and the resulting feature point gFP. After the calculation, the process advances to Step S109.

In Step S109, the controller 13 determines whether or not the interval calculated in Step S108 is less than or equal to the threshold determined in Step S107. When the interval is less than or equal to the threshold, the process advances to Step S110. When the interval is not greater than or equal to the threshold, the process advances to Step S111.

In Step S110, the controller 13 combines at least one frame of the multiple frames of facial images FI read out in Step S105 with the facial structure gFS estimated for the facial image FI of that frame. Instead of the facial structure gFS estimated for the facial image FI of that frame, the controller 13 may instead combine, with the facial image FI of that frame, a facial structure consisting of a midpoint between the starting feature point sFP and the resulting feature point gFP estimated in Step S108 for the facial image FI of that frame. After that, the process advances to Step S112.

In Step S111, the controller 13 discards the multiple frames of facial images FI read out in Step S105. After that, the process advances to Step S112.

In Step S112, the controller 13 determines whether or not enough sets CB3 each consisting of a facial image FI and a facial structure gFS have accumulated. Whether or not enough sets CB3 have accumulated may be determined based on whether or not the number of sets CB3 has exceeded a threshold. When enough sets CB3 have not accumulated, the process advances to Step S105. When enough sets CB3 have accumulated, the process advances to Step S113.

In Step S113, the controller 13 proceeds with supervised learning of the facial images FI for the primary estimator 16a constructed in Step S101, using the facial structure gFS in the sets CB3 as the ground truth, which is the pseudo labeled facial structure vlFS. After the supervised learning, the process advances to Step S114.

In Step S114, the controller 13 stores the data for building the secondary estimator 16b constructed through the supervised learning in Step S113 in the memory 12. After storing the data, the construction processing ends.

The thus-configured facial structure estimating device 10 of this embodiment tracks the starting feature point sFP making up the facial structure gFS in the facial image FI of frames subsequent to a frame of the facial image FI used to estimate the facial structure gFS using a prescribed tracking algorithm. The facial structure estimating device 10 tracks a tracked feature point tFp using a prescribed tracking algorithm in the facial image FI of the original frame to obtain a resulting feature point gFP, and selects a facial image FI for learning for which the interval between the starting feature point sFP and the resulting feature point gFP is less than or equal to a threshold. In general, in a tracking algorithm, the greater the difference between values such as luminance values in the region where tracking is to be performed and values in the surrounding region, the greater the tracking accuracy. Therefore, in the thus-configured facial structure estimating device 10, facial images FI for which the interval between the starting feature point sFP and the resulting feature point gFP is less than or equal to a threshold are selected, and therefore facial images FI for which facial structures gFS made up of feature points having large differences from the surrounding region are estimated are used in training of the estimator 16. A facial structure gFS composed of feature points having large differences from the surrounding region tends to have smaller differences from a labeled facial structure IFS virtually created for the facial image FI used in estimation of the facial structure gFS. The facial structure estimating device 10 trains the estimator 16 using the facial images FI selected for training and the estimated facial structures gFS estimated by the estimator 16 based on the facial images FI. Therefore, the facial structure estimating device 10 can improve the accuracy with which a facial structure gFS is estimated based on a facial image FI. In addition, the facial structure estimating device 10 generates a large amount of training data without assigning ground truth labels, and therefore an increase in annotation cost can be reduced.

The facial structure estimating device 10 estimates the validity of a facial structure gFS estimated by the estimator 16 and varies the threshold based on the validity. The differences between a facial structure gFS composed of feature points having large differences from the surrounding region and a labeled facial structure IFS virtually created for the facial image FI used in estimation of the facial structure gFS are not necessarily always small. On the other hand, if either the validity obtained from the estimation or the difference between the feature points making up the facial structure gFS and the surrounding region is large, the difference between the facial structure gFS and the labeled facial structure lFS is expected to be small. Consequently, in the thus-configured facial structure estimating device 10, since the threshold is varied based on the validity, both facial images FI having a low validity from the estimation and a small interval between the starting feature point sFP and the resulting feature point gFP and facial images FI having a large interval between the starting feature point sFP and the resulting feature point gFP and a high validity from the estimation can be selected for use in training the estimator 16. Therefore, the facial structure estimating device 10 is able to select a greater number of facial images FI so as to reduce leakage, while maintaining high accuracy in estimating the facial structure gFS.

The present disclosure has been described based on the drawings and examples, but it should be noted that a variety of variations and amendments may be easily made by one skilled in the art based on the present disclosure. Therefore, it should be noted that such variations and amendments are included within the scope of the present invention.

### REFERENCE SIGNS

- 10: facial structure estimating device
- 11: acquiring unit
- 12: memory
- 13: controller
- 14: camera
- 15: external device
- 16: estimator
- 16a: primary estimator
- 16b: secondary estimator
- 17: evaluator
- CB1: set of facial image and labeled facial structure
- CB2: set of facial image, labeled facial structure, and validity
- CB3: set of facial image and pseudo labeled facial structure
- FI: facial image
- gFP: resulting feature point
- gFS: estimated facial structure
- IFS: labeled facial structure
- sFP: starting feature point
- vIFS: pseudo labeled facial structure

## Claims

1. A facial structure estimating device comprising:
an acquiring unit configured to acquire a facial image; and
a controller configured to output a facial structure of the facial image,
wherein the controller
functions as an estimator configured to estimate a facial structure of a facial image acquired by the acquiring unit based on the facial image, and
tracks a starting feature point constituting the facial structure using a prescribed tracking algorithm in a facial image of a frame subsequent to a frame of a facial image used in estimation of the facial structure, tracks a tracked feature point using a prescribed tracking algorithm in a facial image of an original frame to obtain a resulting feature point, and selects a facial image for learning for which an interval between the starting feature point and the resulting feature point is less than or equal to a threshold, and
trains the estimator using a facial image selected for learning and a facial structure estimated by the estimator based on the facial image.

2. The facial structure estimating device according to claim 1,
wherein the controller functions as an evaluator that estimates a validity of a facial structure estimated by the estimator and varies the threshold based on the validity.

3. The facial structure estimating device according to claim 1 or 2,
wherein the controller uses, in training of the estimator, a facial image selected for learning and a facial structure composed of a midpoint between the starting feature point, which constitutes a facial structure estimated by the estimator based on the facial image, and the resulting feature point.

4. A facial structure estimating method comprising:
an acquiring step of acquiring a facial image; and
an output step of outputting a facial structure of the facial image,
wherein the output step includes
an estimating step of estimating a facial structure of the facial image acquired in the acquiring step based on the facial image, and
a selecting step of tracking a starting feature point constituting the facial structure using a prescribed tracking algorithm in a facial image of a frame subsequent to a frame of a facial image used in estimation of the facial structure, tracking a tracked feature point using a prescribed tracking algorithm in a facial image of an original frame to obtain a resulting feature point, and selecting a facial image for learning for which an interval between the starting feature point and the resulting feature point is less than or equal to a threshold, and
a training step of training the estimating step using a facial image selected for learning and a facial structure estimated in the estimating step based on the facial image.

5. A facial structure estimating program configured to make a computer function as:
an acquiring unit configured to acquire a facial image; and
a controller configured to output a facial structure of the facial image,
wherein the controller
functions as an estimator configured to estimate a facial structure of a facial image acquired by the acquiring unit based on the facial image, and
tracks a starting feature point constituting the facial structure using a prescribed tracking algorithm in a facial image of a frame subsequent to a frame of a facial image used in estimation of the facial structure, tracks a tracked feature point using a prescribed tracking algorithm in a facial image of an original frame to obtain a resulting feature point, and selects a facial image for learning for which an interval between the starting feature point and the resulting feature point is less than or equal to a threshold, and
trains the estimator using a facial image selected for learning and a facial structure estimated by the estimator based on the facial image.
